# EUROPÄISCHE PATENTSCHRIFT

(11) **EP 0 394 979 B1**
(45) Veröffentlichungstag und Bekanntmachung des Hinweises auf die Patenterteilung: **15.03.1995**
(21) Anmeldenummer: 90107805.5
(22) Anmeldetag: 25.04.1990
(51) Int. Cl.: C04B 28/18

(54) **Entsorgung von Rückständen aus der Abgasreinigung von fossilen Verbrennungseinrichtungen**
Disposal of residues from the purification of waste gas from fossil fuel burners
Elimination de résidus de purification de gaz d'échappement de brûleur à combustibles fossiles

(30) Priorität: 28.04.1989 DE 3914091
(43) Veröffentlichungstag der Anmeldung: 31.10.1990
(73) Patentinhaber: MONTAN-ENTSORGUNG GmbH & Co. KG, D-45128 Essen (DE)
(72) Erfinder: Segeroth, Hermann, 4370 Marl (DE); Krauss, Ulrich, Dr., 4300 Essen-Kettwig (DE)
(74) Vertreter: Kaewert, Klaus

(56) Entgegenhaltungen:
- DE-A- 3 721 133
- US-A- 4 397 742

## Beschreibung

Die Erfindung betrifft die Entsorgung von Rückständen aus der Rauchgasreinigung von fossilen Feuerungseinrichtungen nach dem Sprühabsorptionsverfahren, insbesondere von Rauchgasen aus der Verbrennung von Steinkohle wobei die Rückstände anstelle von Branntkalk bei der Kalksandsteinherstellung verwendet werden.

Die Art der Verbrennung von Steinkohle zur Energieerzeugung und die Entsorgung der erzeugten Aschen und Rückstände aus der Rauchgasreinigung sind in der Bundesrepublik Deutschland ein immer größer werdendes Problem. Einerseits sollen umweltfreundliche Verbrennungstechnologien entwickelt und eingesetzt werden, andererseits müssen die anfallenden Aschen und Rückstände aus Rauchgasreinigungen entsorgt werden. Dabei bestehen seit langem Überlegungen, Aschen und Rückstände zu Baustoffen aufzuarbeiten. Bei den Rückständen handelt es sich im wesentlichen um die Aufbereitung von Schlämmen, welche aus einer Kalkwäsche der Rauchgase anfallen. Diese Schlämme werden zu Gipsprodukten bzw. Alpha-Sulfat-Halbhydrat und Beta-Sulfat-Halbhydrat aufgearbeitet. Dies geschieht durch Wärmebehandlung und/oder Behandlung im Autoklaven unter Druck. Die anfallenden Produkte werden vorzugsweise im Bergbau als Bergbaumörtel eingesetzt. Bekannt ist insbesondere die Verwendung für Streckenbegleitdämme im Bergbau.

Darüber hinaus eignet sich vor allem das auf diesem Wege gewonnene Alpha-Sulfat-Halbhydrat als Zumischkomponente für Zementmischungen.

Mit den bekannten Verfahren lassen sich bislang nicht alle anfallenden Rückstände durch Aufarbeitung zu marktgängigen Produkten entsorgen. Zu den bislang noch ausschließlich zu deponierenden Rückständen gehört der Rückstand aus dem Sprühabsorptionsverfahren. Zwar ist aus der DE-A-3721133 die Verwendung von Rückständen aus der Rauchgasreinigung nach dem Sprühabsorptionsverfahren für die Kalksandsteinherstellung bekannt. Jedoch hat sich das bislang nicht in der Praxis durchsetzen können. Dies ist auf die Einsatzmischung für die Kalksandsteinherstellung zurückzuführen. Die Qualität der hergestellten Steine ist abhängig von der Qualität und dem Zusammenwirken der Einsatzstoffe.

Der Erfindung liegt die Aufgabe zugrunde, vorteilhafte Steinqualitäten zu schaffen. Das wird nach der Erfindung dadurch erreicht, daß einerseits der Rückstand definiert ist, in den Grenzen der kennzeichnenden Merkmale des Patentanspruchs. Andererseits ist der Mischungsanteil des Rückstandes mit 5 - 20 % wesentlich geringer als die in der DE-A-3721133 vorgesehenen 40 bis 60 %. Hinzu kommt, daß nach der Erfindung Quarzmehl und Flugaschen vorgesehen sind. Beide Bestandteile haben wesentlichen Einfluß auf das Produkt.

Zur Kalksandsteinherstellung wird üblicherweise Branntkalk erdfeucht mit quarzitischen Zuschlagstoffen gemischt, z.B. im Verhältnis 1:12. Der ungelöschte Kalk reagiert mit Wasser, das ggf. noch zugesetzt wird, unter Angabe von Wärme zu Kalkhydrat. Es entsteht eine erdfeuchte Mischung, die unter hohem Druck verdichtet und zu den gewünschten Formlingen gepreßt wird. Deren Standfestigkeit erlaubt, die Formlinge zu stapeln und in einen Härtekessel zu fahren. In diesem Autoklav werden die Formlinge mit Sattdampf bei z.B. 165 bis 215 ° C und 9 bis 22 bar Druck ca. 4 bis 8 Stunden gehärtet. Dabei reagiert das Kalkhydrat mit der Kieselsäure des Quarzsandes in Gegenwart des Dampfes zu Calciumsilicathydraten. Nach Abschluß dieses Härtevorganges besitzen die dabei entstandenen Steine ihre endgültigen Steineigenschaften.
Der Rückstand aus dem Sprühabsorptionsverfahren hat vorzugsweise folgende Zusammensetzung:

| | |
|---|---|
| Ca CO₃ | 5 - 40 Gew. % |
| Ca(OH)₂ | 5 - 35 Gew. % |
| Ca SO₃ x 2H₂O | 20 - 50 Gew. % |
| Ca SO₄ x 2H₂O | 2 - 25 Gew. % |
| Ca Cl₂ | 1 - 4 Gew. % |

Ferner können noch Anteile an Steinkohlenflugasche vorhanden sein.

Gegenüber der üblichen Verfahrensweise bei der Herstellung von Kalksandsteinen mit der Verwendung von Branntkalk ergibt sich bei erfindungsgemäßer Verwendung von Sprühabsorptionsrückständen zusätzlich der Vorteil, daß ein Löschreaktor zum Ablöschen des Branntkalkes entfallen kann. D.h. nach der Erfindung wird nichtnur eine Verwendung von Sprühabsorptionsrückständen als Wirtschaftsgut möglich, sondern auch eine Verbesserung des bisherigen Verfahrensweges bei der Kalksandsteinherstellung erreicht.

Die erfindungsgemäßen Einsatzmischungen für die Kalksandsteinherstellung bestehen aus 5 - 90 % Quarzsand, 5 - 20 % Rückstände aus dem Sprühabsorptionsverfahren (SPA), 5 - 15 % Quarzmehl und/oder 5 - 50 % Flugaschen.
Als Quarzmehl wird vorzugsweise Abfallmehl aus der Mahlung für die Glasherstellung verwendet.
Das Quarzmehl besitzt eine feinere Körnung als Sand, jedoch eine gröbere Körnung als das Bindemittel und bewirkt einen zusätzlichen Klebeeffekt.

Beispiel für eine Einsatzmischung zur Kalksandsteinherstellung:
15 % SPA
5 % Quarzmehl-Flugasche
80 % Quarzsand
Alle Prozentangaben sind Gewichtsangaben. Bei 15 % SPA entsteht ein Kalksandstein mit einer Druckfestigkeit von 350 kg/cm ². Eine Reduzierung des SPA-Anteils auf z.B: 13,5 % bewirkt eine Reduzierung der Druckfestigkeit auf 150 kg/cm².

## Patentansprüche

1. Entsorgung von Rückständen aus der Rauchgasreinigung von fossilen Feuerungseinrichtungen nach dem Sprühabsorptionsverfahren, insbesondere von Rauchgasen aus der Verbrennung von Steinkohle, wobei die Rückstände anstelle von Branntkalk bei der Kalksandsteinherstellung verwendet werden, dadurch gekennzeichnet, daß die Einsatzmischung aus
5 - 90 % Quarzsand
5 - 20 % Rückständen aus dem Sprühabsorptionsverfahren (SPA)
5 - 15 % Quarzmehl und/oder
5 - 50 % Flugasche
besteht, wobei der Rückstand SPA folgende Zusammensetzung hat:
| | |
|---|---|
| Ca CO₃ | 5 - 40 Gew. % |
| Ca(OH)₂ | 5 - 35 Gew. % |
| Ca SO₃ x 2H₂O | 20 - 50 Gew. % |
| Ca SO₄ x 2H₂O | 2 - 25 Gew. % |
| Ca Cl₂ | 1 - 4 Gew. % |

## Claims

1. Disposal of residues from the purification of waste gas from fossil fuel burners by the spray absorption process, especially waste gases from the combustion of coal, the residues being used instead of burnt lime in the production of calcareous sandstone, characterized in that the feed mixture consists of
5 - 90 % quartz sand
5 - 20 % residues from the spray absorption process (SPA)
5 - 15 % quartz powder and/or
5 - 50 % flue ash,
the SPA residue having the following composition:
| | |
|---|---|
| CaCO₃ | 5 - 40 % by weight |
| Ca(OH)₂ | 5 - 35 % by weight |
| CaSO₃ x 2H₂O | 20 - 50 % by weight |
| CaSO₄ x 2H₂O | 2 - 25 % by weight |
| CaCl₂ | 1 - 4 % by weight. |

## Revendications

1. Recyclage de résidus provenant du nettoyage des gaz de fumée d'installations de chauffe fossiles selon le procédé d'absorption par pulvérisation, notamment des gaz de fumée issus de la combustion de houille, les résidus étant utilisés à la place de la chaux vive dans la production de brique silico-calcaire, caractérisée en ce que le mélange de cémentation se compose de
5 - 90 % de sable siliceux
5 - 20 % de résidus du procédé d'absorption par pulvérisation
5 - 15 % de poudre de quartz et / ou
5 - 50 % de cendre volante,
les résidus du procédé d'absorption par pulvérisation ayant la composition suivante :
| | |
|---|---|
| Ca CO₃ | 5 - 40 % en poids |
| Ca (OH)₂ | 5 - 35 % en poids |
| Ca SO₃ x 2H₂O | 20 - 50 % en poids |
| Ca SO₄ x 2H₂O | 2 - 25 % en poids |
| Ca Cl₂ | 1 - 4 % en poids |
